# EUROPEAN PATENT SPECIFICATION

(11) **EP 2 855 980 B1**
(45) Date of publication and mention of the grant of the patent: **11.07.2018**
(21) Application number: 13797017.4
(22) Date of filing: 20.05.2013
(51) Int. Cl.: F16H 61/36, F16H 59/04

(54) **COMPACT GEAR LEVER SYSTEM**
KOMPAKTES GETRIEBEHEBELSYSTEM
SYSTÈME COMPACT DE LEVIER DE VITESSES

(30) Priority: 29.05.2012 SE 1250553
(43) Date of publication of application: 08.04.2015
(73) Proprietor: Scania CV AB, 151 87 Södertälje (SE)
(72) Inventor: GYLLSDORFF, Joakim, 118 30 Stockholm (SE); HELLSTRÖM, Kenth, 141 92 Huddinge (SE)
(74) Representative: Scania CV AB
(86) International application number: PCT/SE2013/050567
(87) International publication number: WO 2013/180624

(56) References cited:
- EP-A1- 0 743 475
- EP-A1- 0 860 631
- WO-A1-98/23460
- FR-A1- 2 793 197
- JP-U- H03 100 523
- JP-U- H03 100 523

## Description

### Field of the invention

The present invention relates to a gear lever system according to the preamble of the independent claim. The invention relates in particular to a gear lever system adapted to conveying gearchange movements from the gear lever to the gearbox via two gearchange wires.

### Background to the invention

Many vehicles, e.g. trucks, with manual gear changing currently have a system with rods and links. A disadvantage of these systems is that the link system under the vehicle occupies a relatively large amount of space.

DE-19803607 refers to an example of a gearchange device whereby the gearchange movements are conveyed to the gearbox via a link system. Also JP H03100523U, EP 0743475A1 and EP 0860631A1 relate to gear change devices according to the state of the art.

Using wires to effect gear changes makes it possible to achieve a solution which occupies less space than a link system under the vehicle. A gearbox in which the gears are operated by wires is provided with two gearchange wires which by being moved to predetermined positions in longitudinal directions, often by means of a gearchange servo, engage the required gear.

The object of the present invention is to propose instead of the link system a manual gearchange system with wires which not only meets the requirements of exactness of gear changes demanded by the vehicle's driver but is also advantageous in terms of production technology and is therefore economic.

### Summary of the invention

The above objects are achieved with the invention defined by the independent claim.

Preferred embodiments are defined by the dependent claims.

To maintain good gearchange sensation for the vehicle's driver, the gear lever needs to be not too long. The movement from neutral position to gear engaged should be of the order of 60-80 mm and the distance sideways between different gear positions be of the order of 30-40 mm.

The requirement to provide good gearchange sensation therefore makes it necessary, particularly on large vehicles, for the rotation centre of the gear lever to be situated above the fastening surface in the cab floor. Such a location would mean that the fastening of the wires to the gear lever would have to be relocated upwards from the cab floor, i.e. the wires would have to enter the cab, which needs to be avoided, inter alia for production reasons.

To be able to relocate the lever's rotation point upwards and avoid having to fit the wires within the cab, a gearchange system according to the present invention is proposed.

The gear lever system according to the present invention allows motion from the lever to be conveyed to the wires in a desired way, and results inter alia in correct pulling and pushing directions being imparted to the wires.

The advantage of this solution is that a shorter gear lever may be used despite the wires being fitted under the cab floor and not having to enter the cab. This also makes it possible for the gear lever solution to be used in cabs of different sizes, which is achieved by simply changing the height of the support module and the length of the vertical elements. The gear lever system also makes it possible to adapt the configuration to the pulling and pushing directions of the wires, e.g. if the gearchange servo so requires. This is solved by changing the positions of the lower transfer arms.

### Brief description of drawings

Figure 1 is a perspective depiction of a gear lever system according to the present invention.
Figure 2 is a schematic example of a gear layout.
Figure 3 is a further perspective depiction of a gear lever system according to the present invention.
Figure 4 is a schematic cross-section through the upper link system according to the present invention.

### Detailed description of preferred embodiments of the invention

The present invention will now be described in detail with reference to the drawings, in which the same reference notations are used throughout for the same or similar parts.

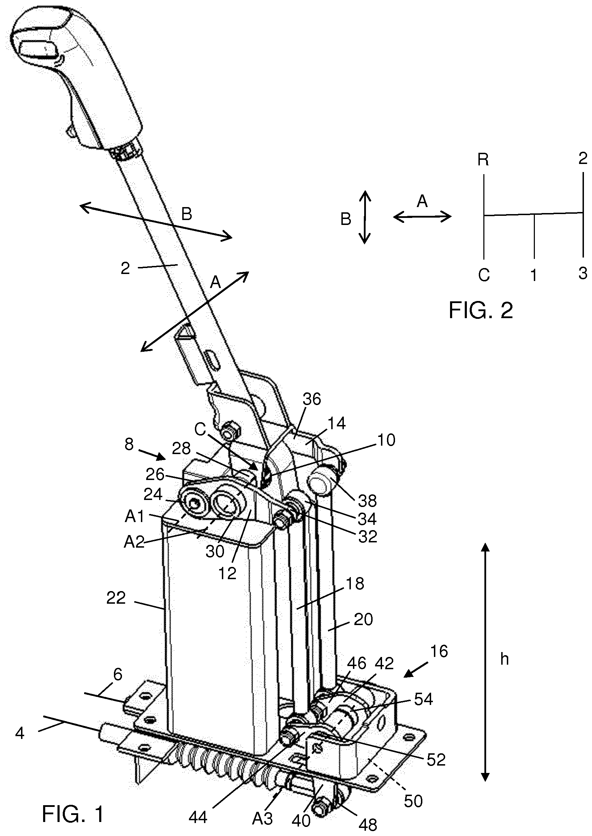

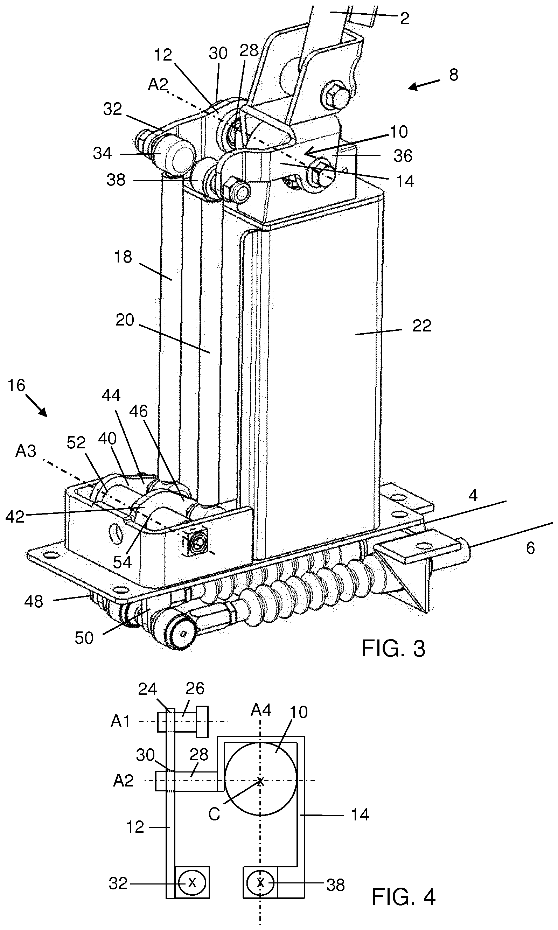

The invention thus relates to a gear lever system (see in particular Figures 1 and 3) for wire gearchange in a vehicle, preferably a truck, whereby gearchange movements are conveyed from the gear lever 2 to two gearchange wires 4, 6 which run substantially horizontally from a location under the vehicle's driving cab and into the vehicle's gearbox. In the drawings, the gearchange wires are arranged to run through corrugated protective sleeves. The gear lever system comprises a gear lever 2 and an upper link system 8 situated close to the lower end of the gear lever and comprising a spherical bearing 10 with a rotation point C about which said gear lever is movable.

The upper link system 8 comprises a first upper transfer arm 12 and a second upper transfer arm 14 adapted to moving in response to gearchange movements imparted via the gear lever 2.

The gear lever system further comprises a lower link system 16 and a first vertical element 18 and a second vertical element 20 adapted to conveying movements from said respective first and second upper transfer arms 12, 14 of the upper link system 8 to the lower link system 16.

The upper link system 8 is situated on an upper end of a vertically oriented support module 22 which has a vertical height h, and the lower link system 16 is situated at a lower end of the support module and adapted to converting vertical movements of the vertical elements 18, 20 to horizontal movements of the gearchange wires 4, 6. The height h of the support module, and hence also the length of the vertical elements, is appropriate to the desired location of the gear lever, which itself depends on the size of the cab in which the gear lever system is to be fitted. In the drawing, the support module has a rectangular cross-section but other shapes are of course possible within the scope of the inventive concept.

The first and second upper transfer arms are situated on opposite sides of the spherical bearing.

The first upper transfer arm 12 has one end 24 fastened in a bearing whereby it is movable about a horizontal lateral thrust spindle 26, i.e. it is movable in vertical directions, and the longitudinal axis A1 of the lateral thrust spindle is at a predetermined distance from the rotation point C of the spherical bearing. The first upper transfer arm is also adapted to being acted upon by the gear lever via a transfer spindle 28 which has a longitudinal axis A2 running through the rotation point C of the spherical bearing. The transfer spindle is fastened in the first upper transfer arm 12 via a plain bearing 30 which allows the transfer spindle from the gear lever to be angled, be rotated and be slid substantially at right angles to the first upper transfer arm.

The first upper transfer arm further comprises a first fastening point 32 situated at an end which is opposite to the end where the fixed lateral thrust spindle 26 is situated, which first fastening point is fastened via a bearing, preferably a spherical bearing, to an upper end 34 of said first vertical element 18.

The second upper transfer arm 14 has one end 36 firmly connected to the lower portion of the gear lever 2 and further has, at an opposite end, a second fastening point 38 which is fastened, via a bearing, preferably a spherical bearing, to an upper end of the second vertical element 20.

A notional axis A4, which runs through the rotation point of the spherical bearing 10 and the bearing at the second fastening point 38, is perpendicular to the axis A2, as illustrated schematically in Figure 4.

The lower link arm system 16 is at a vertical distance h below the upper link arm system 8 and adapted to cooperating with the first and second gearchange wires 4, 6. It comprises a first lower transfer arm 40 and a second lower transfer arm 42, which each consist of a substantially horizontally directed upper portion 44, 46 and a vertically directed lower portion 48, 50 and are each rotatably fastened to the support module via a bearing 52, 54 in such a way that they are rotatable about a horizontally directed axis A3. The lower end of the lower portion of each of the lower transfer arms is fastened to a gearchange wire.

The function of the gear lever system will now be described in more detail. It allows the gear lever to be movable to right and left, as viewed by the driver, in a first gearchange movement A represented by a two-directional arrow A in Figures 1 and 2. Movement A denotes movement in the neutral state of the gearbox.

The gear lever system also allows the gear lever to be movable forwards and rearwards, as viewed by the driver, in a second gearchange movement B represented by a two-directional arrow B in Figures 1 and 2.

Movement B denotes movement from the neutral state of the gearbox to desired gear positions. Figure 2 depicts an example of a gear pattern in which R represents reverse gear, C inching gear and 1, 2 and 3 are forward gears.

The linking according to the present invention means that there is no need for any fastening of the gear lever to be situated near to the wire fastening.

A gearchange operation comprises two phases, the first being in the form of the first gearchange movement A, i.e. the driver moving the gear lever to a desired position along the line A. This results in a rotary movement about the rotation point C, causing the first upper transfer arm 12, by the action of the transfer spindle 28, to rotate about the axis A1 in such a way that gear lever movement to the right causes the transfer arm 12 to move upwards and thereby cause the vertical element 18 to move in a vertical direction upwards. The vertical element 18, via the first lower transfer arm 40, thereupon imparts motion to the first gearchange wire 4 in an inward direction into the gearbox.

Gear lever movement to the left causes the transfer arm 12 to move downwards and thereby cause the vertical element 18 to move in a vertical direction downwards. The vertical element, via the first lower transfer arm 40, thereupon imparts motion to the first gearchange wire 4 in an outward direction from the gearbox.

As the axis A4 (see figure 4) is perpendicular to the axis A2, the second vertical element 20 will be motionless when the gear lever is moved in the neutral state, i.e. in gearchange movement A.

The second phase of the gearchange operation is by the driver moving the gear lever to a desired upward or downward gear position from the neutral state, i.e. gearchange movement B. This is likewise by a rotary movement about the rotation point C in which the plain bearing 30 helps the first upper transfer arm 12 to remain in its position. Forward movement (upwards in Figure 2) will cause the second upper transfer arm 14, which has one end firmly connected to the lower portion of the gear lever, to move in such a way that its other end moves upwards. This causes the second vertical element 20 to move in a vertical direction upwards. The vertical element 20, via the second lower transfer arm 42, thereupon imparts motion to the second gearchange wire in an inward direction into the gearbox.

Rearward movement (downwards in Figure 2) will cause the second upper transfer arm 14 to move in such a way that its end 38 moves downwards. This causes the second vertical element 20 to move in a vertical direction downwards. The vertical element 20, via the second lower transfer arm 42, thereupon imparts motion to the second gearchange wire 6 in an outward direction from the gearbox.

The lengths of the upper and lower portions of the lower transfer arms 40, 42 are determined on the basis of the travel distances desired for the gearchange wires. The lower portion has a typical length of 60 mm, the upper portion a typical length of 40 mm. Typical travel distances are +/- 25 mm.

The respective upper portions 44, 46 of the lower transfer arms may be directed forwards, as in the drawings, or rearwards. The relation between the movements of the vertical elements and those of the wires may therefore be changed.

In the above description of the drawings, downward movement of the vertical element caused the gearchange wire to move outwards from the gearbox, and upward movement of the vertical element caused the wire to move into the gearbox.

If instead either or both of the upper portions are directed rearwards, downward movement of the vertical element will cause the gearchange wire to move into the gearbox, and upward movement of the vertical element will cause the wire to move outwards from the gearbox.

The present invention is not restricted to the preferred embodiments described above. The above embodiments are therefore not to be regarded as limiting the invention's protective scope which is defined by the attached claims.

## Claims

1. A gear lever system for wire gearchange of a vehicle, preferably a truck, whereby gearchange movements are conveyed from the gear lever (2) to two gearchange wires (4, 6) which run substantially horizontally from a location under the vehicle's driving cab and into the vehicle's gearbox, which system comprises a gear lever (2) and an upper link system (8) situated close to the lower end of the gear lever and comprising a spherical bearing (10) with a rotation point (C) about which said gear lever is movable, said upper link system comprising a first upper transfer arm (12) and a second upper transfer arm (14) adapted to moving in response to gearchange movements imparted via the gear lever (2), the gear lever system further comprises a lower link system (16) and a first vertical element (18) and a second vertical element (20) adapted to conveying motion from said respective first and second upper transfer arms (12, 14) of the upper link system (8) to the lower link system (16), said upper link system being situated on an upper end of a vertical support module (22) which has a vertical height (h) and said lower link system (16) being situated at a lower end of the support module so that said lower link system is adapted to converting vertical movements of the vertical elements (18, 20) to horizontal movements of the gear change wires (4, 6), **characterised**
**in that** said first upper transfer arm (12) has one end (24) fastened in a bearing whereby the first upper transfer arm (12) is movable about a horizontal lateral thrust spindle (26), the longitudinal axis (A1) of the lateral thrust spindle being at a predetermined distance from the rotation point (C) of the spherical bearing, and the first upper transfer arm is adapted to being acted upon by the gear lever via a transfer spindle (28) which has a longitudinal axis (A2) running through the rotation point of the spherical bearing.

2. A gear lever system according to claim 1, in which said first and second upper transfer arms are situated on opposite sides of the spherical bearing.

3. A gear lever system according to claim 1, in which the transfer spindle (28) is fastened in the first upper transfer arm (12) via a plain bearing (30) which allows the transfer spindle (28) from the gear lever to be angled, to rotate and to be slid substantially at right angles to the first upper transfer arm.

4. A gear lever system according to claim 3, in which the first upper transfer arm further has a first fastening point (32) at an end which is opposite to the end where the fixed lateral thrust spindle (26) is situated, which first fastening point (32) is fastened via a bearing, preferably a spherical bearing, to an upper end (34) of said first vertical element (18).

5. A gear lever system according to any one of claims 1-4, in which the second upper transfer arm (14) has one end (36) firmly connected to the lower portion of the gear lever (2) and further has, at an opposite end, a second fastening point (38) which is fastened via a bearing, preferably a spherical bearing, to an upper end of said second vertical element (20).

6. A gear lever system according to any one of claims 1-5, in which the lower link arm system (16) is situated at a vertical distance (h) below the upper link arm system (8), is adapted to cooperating with the first and second gearchange wires (4, 6) and comprises a first lower transfer arm (40) and a second lower transfer arm (42) which each consist of a substantially horizontally directed upper portion (44, 46) and a vertically directed lower portion (48, 50) and are each rotatably fastened to the support module via a bearing (52, 54) in such a way that they are rotatable about a horizontally directed axis A3.

7. A gear lever system according to claim 6, in which the lower end of the lower portion of each of the lower transfer arms is fastened to a gearchange wire.

## Patentansprüche

1. Schalthebelsystem für eine Drahtseil-Gangschaltung eines Fahrzeugs, vorzugsweise eines Lastkraftwagens, wobei Gangschaltbewegungen vom Schalthebel (2) an zwei Gangschalt-Drahtseile (4, 6) übertragen werden, die vor einer Stelle unter der Fahrerkabine des Fahrzeugs im Wesentlichen horizontal und in das Fahrzeuggetriebe verlaufen, wobei das System einen Schalthebel (2) und ein nahe am unteren Ende des Schalthebels angeordnetes oberes Gelenksystem (8) aufweist, das ein Gelenklager (10) mit einem Drehpunkt (C) aufweist, um den der Schalthebel beweglich ist, wobei das obere Gelenksystem einen ersten oberen Übertragungsarm (12) aufweist, der zur Bewegung als Reaktion auf über den Schalthebel (2) aufgebrachte Gangschaltbewegungen eingerichtet ist, wobei das Schalthebelsystem ferner ein unteres Gelenksystem (16), ein erstes vertikales Element (18) und ein zweites vertikales Element (20) aufweist, die dazu eingerichtet sind, eine Bewegung vom jeweiligen ersten und zweiten oberen Übertragungsarm (12, 14) des oberen Gelenksystems (8) auf das untere Gelenksystem (16) zu übertragen, wobei das obere Gelenksystem an einem oberen Ende eines vertikalen Trägermoduls (22) mit einer vertikalen Höhe (h) angeordnet ist, und das untere Gelenksystem (16) an einem unteren Ende des Trägermoduls angeordnet ist, so dass das untere Gelenksystem zum Wandeln vertikaler Bewegungen der vertikalen Elemente (18, 20) in horizontale Bewegungen der Gangschalt-Drahtseile (4, 6) eingerichtet ist,
**dadurch gekennzeichnet, dass**
ein Ende (24) des ersten oberen Übertragungsarms (12) in einem Lager befestigt ist, wobei der erste obere Übertragungsarm (12) um eine horizontale Seitenschubwelle (26) beweglich ist, wobei die Längsachse (A1) der Seitenschubwelle in einem vorgegebenen Abstand vom Drehpunkt (C) des Gelenklagers verläuft,
und der erste obere Übertragungsarm so eingerichtet ist, dass er vom Schalthebel über eine Übertragungswelle (28) mit einer durch den Drehpunkt (C) des Gelenklagers verlaufenden Längsachse (A2) bewegt wird.

2. Schalthebelsystem nach Anspruch 1, wobei sich der erste und der zweite Übertragungsarm an gegenüberliegenden Seiten des Gelenklagers befinden.

3. Schalthebelsystem nach Anspruch 1, bei dem die Übertragungswelle (28) über ein Gleitlager (30) im ersten oberen Übertragungsarm (12) befestigt ist, so dass die Übertragungswelle (28) winklig zum Schalthebel eingestellt, gedreht und im Wesentlichen im rechten Winkel zum ersten oberen Übertragungsarm verschoben werden kann.

4. Schalthebelsystem nach Anspruch 3, bei dem der erste obere Übertragungsarm ferner einen ersten Befestigungspunkt (32) an einem Ende gegenüber dem Ende hat, an dem die fixierte Seitenschubwelle (26) angeordnet ist, wobei der erste Befestigungspunkt (32) über ein Lager, vorzugsweise ein Gelenklager, an einem oberen Ende (34) des ersten vertikalen Elements (18) befestigt ist.

5. Schalthebelsystem nach einem der Ansprüche 1 bis 4, bei dem der zweite obere Übertragungsarms (14) mit einem Ende fest mit dem unteren Abschnitt des Schalthebels (2) verbunden ist, und ferner einen zweite Befestigungspunkt (38) an einem gegenüberliegenden Ende aufweist, der über ein Lager, vorzugsweise ein Gelenklager, an einem oberen Ende des zweiten vertikalen Elements (20) befestigt ist.

6. Schalthebelsystem nach einem der Ansprüche 1 bis 5, bei dem das untere Gelenkarmsystem (16) in einem vertikalen Abstand (h) unter dem oberen Gelenkarmsystem (8) angeordnet, zum Zusammenwirken mit dem ersten und dem zweiten Gangschalt-Drahtseil (4, 6) eingerichtet ist und einen ersten unteren Übertragungsarm (40) sowie einen zweiten unteren Übertragungsarm (42) aufweist, die jeweils aus einem in Wesentlichen horizontal gerichteten oberen Abschnitt (44, 46) und einem vertikal gerichteten unteren Abschnitt (48, 50) bestehen und jeweils über ein Lager (52, 54) drehbar am Trägermodul so angebracht sind, dass sie um eine horizontal gerichtete Achse (A3) rotieren können.

7. Schalthebelsystem nach Anspruch 6, bei dem das untere Ende des unteren Abschnitts jedes der unteren Übertragungsarme an einem Gangschalt-Drahtseil befestigt ist.

## Revendications

1. Système de levier de vitesses pour un changement de vitesse à câbles d'un véhicule, de préférence un camion, par lequel les mouvements de changement de vitesse sont transmis du levier de vitesses (2) à deux câbles de changement de vitesse (4, 6) qui s'étendent sensiblement horizontalement à partir d'un emplacement situé sous la cabine de conduite du véhicule et jusque dans la boîte de vitesses du véhicule, lequel système comprend un levier de vitesses (2) et un système de liaison supérieur (8) situé à proximité de l'extrémité inférieure du levier de vitesses et comprenant un roulement à rotule (10) doté d'un point de rotation (C) autour duquel ledit levier de vitesses est mobile, ledit système de liaison supérieur comprenant un premier bras de transfert supérieur (12) et un second bras de transfert supérieur (14) adaptés pour se déplacer en réponse à des mouvements de changement de vitesse opérés via le levier de vitesses (2), le système de levier de vitesses comprenant, en outre, un système de liaison inférieur (16) et un premier élément vertical (18) et un second élément vertical (20) adaptés pour transmettre le mouvement depuis lesdits premier et second bras de transfert (12, 14) respectifs du système de liaison supérieur (8) au système de liaison inférieur (16), ledit système de liaison supérieur étant situé sur une extrémité supérieure d'un module de support vertical (22) qui présente une hauteur verticale (h) et ledit système de liaison inférieur (16) étant situé à une extrémité inférieure du module de support de sorte que ledit système de liaison inférieur est adapté pour convertir les mouvements verticaux des éléments verticaux (18, 20) en mouvements horizontaux des câbles de changement de vitesse (4, 6), **caractérisé en ce que**
ledit premier bras de transfert supérieur (12) a une extrémité fixée fixée dans un palier, le premier bras de transfert supérieur (12) étant ainsi mobile autour d'un axe de poussée latéral horizontal (26), l'axe longitudinal A1 de l'axe de poussée latéral étant à une distance prédéterminée du point de rotation (C) du roulement à rotule, et le premier bras de transfert supérieur est adapté pour être sollicité par le levier de vitesses via un axe de transfert (28) qui présente un axe longitudinal (A2) s'étendant à travers le point de rotation du roulement à rotule.

2. Système de levier de vitesses selon la revendication 1, dans lequel lesdits premier et second bras de transfert supérieurs sont situés sur des côtés opposés du roulement à rotule.

3. Système de levier de vitesses selon la revendication 1, dans lequel l'axe de transfert (28) est fixé dans le premier bras de transfert supérieur (12) via un palier lisse (30) qui permet à l'axe de transfert (28) d'être incliné à partir du levier de vitesses, de tourner et de coulisser sensiblement à angle droit par rapport au premier bras de transfert supérieur.

4. Système de levier de vitesses selon la revendication 3, dans lequel le premier bras de transfert supérieur présente, en outre, un premier point de fixation (32) à une extrémité qui est opposée à l'extrémité où est situé l'axe de poussée latéral fixe (26), lequel premier point de fixation (32) est fixé via un palier, de préférence un roulement à rotule, à une extrémité supérieure (34) dudit premier élément vertical (18).

5. Système de levier de vitesses selon l'une quelconque des revendications 1 à 4, dans lequel le second bras de transfert supérieur (14) présente une extrémité (36) solidement reliée à la partie inférieure du levier de vitesses (2) et présente, en outre, à une extrémité opposée, un second point de fixation (38) qui est fixé via un palier, de préférence un roulement à rotule, à une extrémité supérieure dudit second élément vertical (20).

6. Système de levier de vitesses selon l'une quelconque des revendications 1 à 5, dans lequel le système de bras de liaison inférieur (16) est situé à une distance verticale (h) au-dessous du système de bras de liaison supérieur (8), est adapté pour coopérer avec les premier et second câbles de changement de vitesse (4, 6) et comprend un premier bras de transfert inférieur (40) et un second bras de transfert inférieur (42) qui consistent chacun en une partie supérieure (44, 46) dirigée sensiblement horizontalement et une partie inférieure (48, 50) dirigée verticalement et sont chacun fixés à rotation au module de support via un palier (52, 54) de façon à pouvoir tourner autour d'un axe A3 dirigé horizontalement.

7. Système de levier de vitesses selon la revendication 6, dans lequel l'extrémité inférieure de la partie inférieure de chacun des bras de transfert inférieurs est fixée à un câble de changement de vitesse.
